Europäisches Patentamt

**European Patent Office**

Office européen des brevets

(19)

(11) Numéro de publication : **0 258 720 B1**

(12) **FASCICULE DE BREVET EUROPEEN**

(45) Date de publication du fascicule du brevet :
02.01.91 Bulletin 91/01

(51) Int. Cl.⁵ : **G04B 27/00, G04B 19/26**

(21) Numéro de dépôt : **87111859.2**

(22) Date de dépôt : **17.08.87**

(54) **Dispositif horométrique indicateur de la position des planètes.**

(30) Priorité : **05.09.86 CH 3573/86**

(43) Date de publication de la demande :
**09.03.88 Bulletin 88/10**

(45) Mention de la délivrance du brevet :
**02.01.91 Bulletin 91/01**

(84) Etats contractants désignés :
**DE FR GB**

(56) Documents cités :
**CH-B- 379 164
CH-B- 627 042
FR-A- 2 565 374
US-A- 3 766 727**

(73) Titulaire : **Ulysse Nardin S.A.
3, rue du Jardin
CH-2400 Le Locle (CH)**

(72) Inventeur : **Oechslin, Ludwig
Friedentalstrasse 33
CH-6004 Lucerne (CH)**

(74) Mandataire : **de Montmollin, Henri et al
ICB Ingénieurs Conseils en Brevets SA
Passage Max Meuron 6
CH-2001 Neuchâtel (CH)**

## Description

La présente invention concerne un dispositif horométrique indicateur de la position des planètes destiné à être intégré dans une pièce d'horlogerie portable et plus particulièrement un dispositif comprenant un bâti, un organe moteur, des moyens d'affichage de ladite position montes pivotants sur ledit bâti, lesdits moyens d'affichage comprenant une pluralité d'éléments mobiles en rotation autour d'un axe commun, chacun desdits éléments mobiles comprenant un organe support, un organe d'affichage representant un signe distinctif associé à l'une desdites planètes et un organe d'entraînement relié cinématiquement à l'organe moteur, l'organe d'affichage et l'organe d'entraînement étant solidaires de l'organe support.

De tels dispositifs, connus sous le nom de planétarium, sont généralement associés à des horloges astronomiques.

Un dispositif de ce type est précisément décrit dans le document US 3 766 727. Toutefois, selon ce document, les moyens d'affichage sont constitués par une pluralité d'organes supports reliés respectivement à une pluralité d'arbres creux télescopiques. Ces arbres creux forment une structure étagée et sont reliés à une pluralité de roues d'entraînement superposées et disposées coaxialement par rapport à ces derniers. Par ailleurs, les organes supports ont chacun la configuration d'une tige pliée à angle droit dont l'extrémité proximale est fixée à un arbre creux et dont l'extrémite distale porte l'organe d'affichage associé à une planète.

Bien que ces organes d'affichage soient disposées sensiblement dans un même plan, leurs structures de support (tiges coudées et arbres creux télescopiques) et leurs structures d'entraînement (roues superposées) sont formées d'empilements qui présentent un encombrement très important et dont l'épaisseur ne permet pas un montage dans une pièce d'horlogerie portable.

D'autre part, le document FR 2 565 374 décrit un dispositif à graduations utilisables pour des calculs astrologiques. Ce dispositif comprend un élément fixe ayant la forme d'une rondelle et deux autres éléments mobiles annulaires montés de part et d'autre de l'élément fixe pour pouvoir tourner par rapport à celui-ci, et chaque élément présente une surface d'affichage portant des graduations et/ou des informations astrologiques.

Bien que ces surfaces d'affichage soient formées d'un anneau dont la face supérieure porte un signe distinctif, le dispositif selon ce document ne comprend pas de moyens d'entraînement des éléments mobiles et rien dans ce document n'est suggéré quant à la réalisation d'un tel entraînement afin de pouvoir intégrer ce dispositif dans une pièce d'horlogerie portable.

Par ailleurs, il a également été suggéré de réaliser des dispositifs horométriques du type décrit plus haut sur des pièces d'horlogerie portables. L'un deux est décrit dans le document CH 627 042 et constitue une montre comportant deux faces, l'une munie de moyens d'indication de l'heure, de la date et de la phase de lune notamment, et l'autre de disques superposés, tournant autour d'un axe commun, chaque disque portant le signe distinctif d'une planète. Les moyens d'entraînement des disques comportent des roues superposées, coaxiales à ces derniers, à raison d'une roue par disque. On comprendra aisément qu'une telle disposition nécessite là encore une épaisseur importante.

L'invention a donc pour but principal de remédier aux inconvénients de l'art antérieur et de fournir un dispositif horométrique indicateur de la position des planètes du système solaire occupant une épaisseur la plus réduite possible.

Ainsi, conformément à l'invention, au moins une partie des éléments mobiles sont formés par des anneaux concentriques coplanaires présentant une surface d'affichage portant ledit signe distinctif et les organes d'entraînement de ces anneaux s'étendent sensiblement dans un même plan.

Grâce à ces caractéristiques, l'épaisseur de la structure de l'ensemble affichage/entraînement est considérablement réduite si bien que l'intrégration d'un tel dispositif dans une pièce d'horlogerie portable et rendue possible.

En outre, selon le dispositif décrit dans le document CH 627 042, les planètes tournent autour du Soleil à une vitesse angulaire égale à leur vitesse moyenne de rotation autour du Soleil, le référentiel étant défini par le système stellaire.

Ainsi que cela a été dit précédemment, l'indication de la phase de Lune se fait, dans ce dispositif, sur la première face de la montre, c'est-à-dire celle portant les indications horaires. Or, une telle indication fait partie intégrante des informations astronomiques. Cette information ne pouvait être associée au dispositif décrit sans augmenter considérablement le volume et revoir fondamentalement la construction car il aurait été nécessaire de monter pivotant et d'entraîner un disque de Lune sur le disque portant l'indication de la Terre.

Un autre but de la présente invention est de réaliser un planétarium permettant d'afficher dans un volume réduit les informations associées à la Terre et à la Lune.

Ce but est atteint grâce aux caractéristiques particulières que présente le dispositif de la revendication 4.

Cela revient à dire que le système de référence n'est plus le système stellaire, mais l'ensemble formé par le Soleil et la Terre. De la sorte, il est possible de compléter le planétarium par des éléments d'affichage complémentaires associés au mouvement de la Lune autour de la Terre, ces éléments étant montés pivotant sur le support même.

Dans un planétarium de dimensions aussi réduites que possible, on peut se contenter de ne représenter que les planètes les plus voisines de la Terre, ce qui est fait dans le document cité ci-dessus, ou alors représenter les planètes les plus éloignées sur des cercles plus proches du centre qu'ils ne le seraient si l'on utilisait la même échelle que celle utilisée pour les planètes plus proches. Il en résulte que la mesure de la position angulaire des planètes par rapport à la Terre est faussée par un effet de parallaxe.

Un autre but de la présente invention est de résoudre ce problème.

Ce but est atteint grâce aux caractéristiques particulières que présente le dispositif de la revendication 7.

L'invention sera mieux comprise à la lecture de la description qui va suivre, faite en référence au dessin annexé, sur lequel :
– la figure 1 représente une vue d'ensemble d'un planétarium selon l'invention et plus spécialement de ses moyens d'affichage des fonctions astronomiques ;
– la figure 2 est une vue agrandie d'une partie du dispositif de la figure 1 ;
– la figure 3 est une coupe partielle selon la ligne III-III du planétarium de la figure 1 ;
– la figure 4 est une vue en plan schématique du train d'engrenages entraînant les moyens d'affichage associés à la Terre, à la Lune, à l'écliptique, ainsi que l'aiguille du Dragon ;
– Les figures 5 à 8 représentent chacune une partie des trains d'engrenages de la figure 4, pour entraîner respectivement les moyens d'affichage associés à la Terre, à la Lune, l'aiguille du Dragon et les moyens d'affichage associés à l'écliptique ;
– la figure 9 représente, en plan, les trains d'engrenages entraînant les éléments d'affichage associés à Mercure, à Vénus et à Mars ;
– la figure 10 est une vue en coupe du train d'engrenages entraînant les éléments d'affichage associés à Mercure et à Vénus ;
– la figure 11 est une vue en coupe du train d'engrenages entraînant l'élément d'affichage associé à Mars;

– la figure 12 est une vue en plan des trains d'engrenages entraînant les éléments d'affichage associés à Saturne, Jupiter, Uranus, Neptune et Pluton ;
– les figures 13 et 14 représentent respectivement des vues en coupe des trains d'engrenages pour l'entraînement des éléments d'affichage associés à Uranus, Neptune et Pluton, et Saturne et Jupiter ; et
– la figure 15 illustre une partie d'un mécanisme de correction du planétarium.

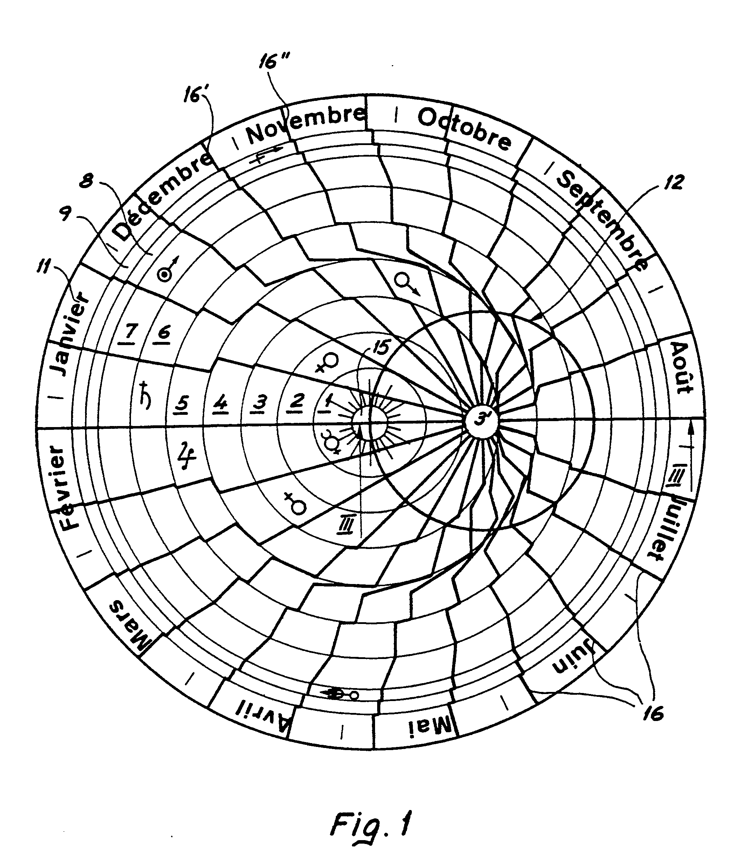

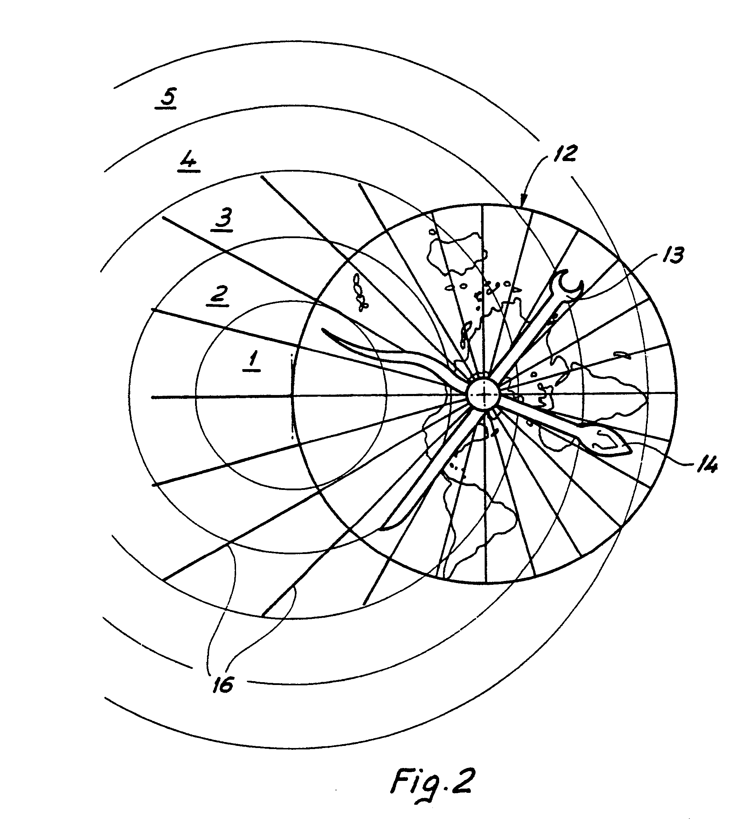

Le dispositif représenté à la figure 1 représente un planétarium permettant l'affichage des informations relatives à la position des principaux corps célestes du système solaire, et plus particulièrement des planètes, au moyen d'un disque central 1 et de huit anneaux concentriques à ce disque, numérotés de 2 à 9, associés respectivement à Mercure, Vénus, la Terre, Mars, Jupiter, Saturne, Uranus, Neptune et Pluton, l'anneau 3 de la Terre étant fixe pour des raisons qui seront expliquées ultérieurement. Un neuvième anneau 11, périphérique et concentrique aux précédents porte les informations relatives à l'écliptique. Ce dispositif est en outre muni de moyens d'affichage associés à la Terre et à la Lune. Ces moyens sont plus particulièrement représentés sur la figure 2. Ils comportent un disque 12 effectuant un tour en 24 heures et représentant schématiquement la Terre, une première aiguille 13 effectuant un tour en un peu plus de 29 jours et portant le symbole de la Lune et une deuxième aiguille 14, dite aiguille du Dragon, dont la fonction et la vitesse de rotation seront précisées ci-après. Ces derniers moyens d'affichage sont montés pivotants sur l'anneau 3 associé à la Terre, d'une manière qui sera précisée ci-après.

Il faut relever que le Soleil ne comporte pas de moyens spécifiques d'affichage. Sa position étant confondue avec l'axe de rotation du disque 1 et des anneaux 2 à 9, il a simplement été représenté par l'image centrale 15 que porte le disque 1, ce dernier servant par ailleurs à afficher, dans sa périphérie, la position de Mercure.

Il faut encore relever sur la figure 1 que la distance entre le Soleil et chacune des planètes n'obéit pas à une échelle unique. On comprendra aisément que si l'échelle était la même, soit les planètes les plus éloignées ne seraient pas représentées, soit les dimensions du planétarium le rendraient intransportable. Ceci est dû au fait que le rapport entre la distance du Soleil à respectivement Pluton et Mercure est de plus de 100. Sur cette figure 1, les planètes situées au-delà de la Terre dans le système solaire sont toutes plus rapprochées du centre qu'elles ne devraient l'être si l'échelle était unique. Cela ne change rien quant à la

3

position relative des planètes par rapport au Soleil. Il n'en est pas de même de la position relative des planètes vues de la Terre, car ce changement d'échelle provoque une erreur de parallaxe. Pour pouvoir néanmoins mesurer la position de chacune des planètes, le dispositif selon l'invention comporte un réseau polaire réticulé, centré sur la Terre et réalisé au moyen de 24 lignes brisées réparties en un faisceau 16 dont le centre coïncide avec la position de la Terre.

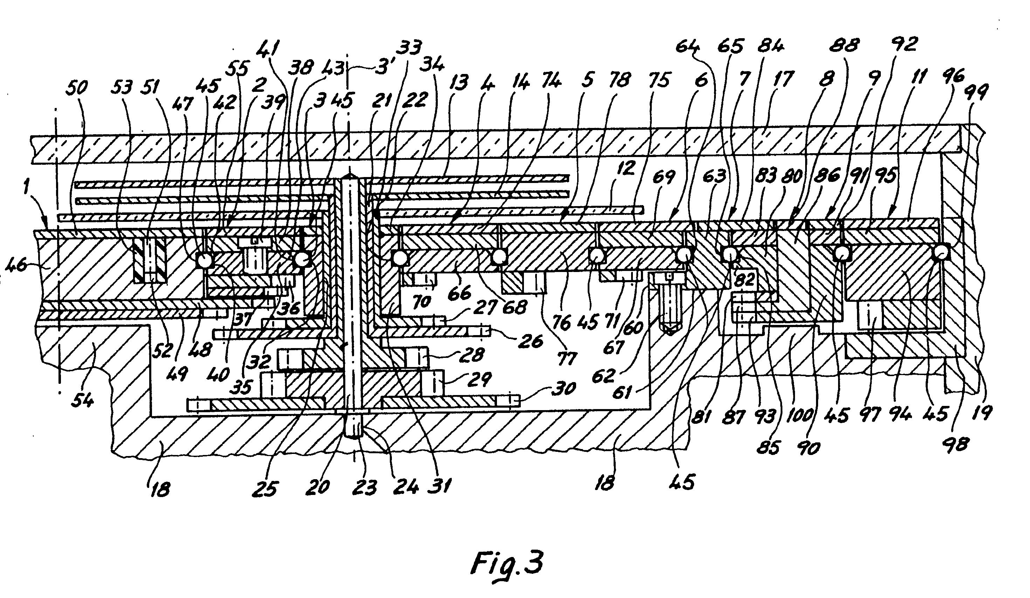

La distance entre deux réticules correspond donc à un angle de 15°. Ce réseau est avantageusement porté par un verre 17, placé à l'avant des moyens d'affichage et représenté à la figure 3.

Pour lire la position d'une planète, vue de la Terre, par rapport au Soleil, il faut considérer que l'observateur se trouve au point 3' de l'anneau 3, ce point correspondant à la position de la Terre dans le système solaire. Il faut ensuite localiser la planète dont on veut connaître la position. Ainsi, Pluton représenté sur l'anneau 9, se trouve entre les réticules 16' et 16'' sensiblement à mi-chemin. Il y a quatre réticules entre la zone occupée par Pluton et la droite reliant la Terre au Soleil. De plus, vu de la Terre, Pluton se trouve à droite du Soleil. Quatre réticules représentent 60°. Cela revient à dire que l'angle entre le Soleil et Pluton, vu de la Terre, est sensiblement égal à 67° et que Pluton est situé à l'ouest du Soleil.

Ces disques, anneaux et aiguilles sont mus par des trains d'engrenages reliés au rouage d'une pièce d'horlogerie. Les caractéristiques de cette pièce d'horlogerie ne présentant pas de caractéristique originale, elle n'a pas été représentée au dessin.

Il y a lieu maintenant d'expliquer la fonction de l'aiguille de Dragon. Cette aiguille est le seul élément d'affichage à ne pas être directement associé au mouvement d'un corps céleste. Elle permet de déterminer les éclipses de Lune et de Soleil. Plus précisément, il y a éclipse de Lune lorsque l'aiguille de Lune 13 et l'aiguille de Dragon 14 se trouvent superposées à la droite reliant le Soleil et la Terre, à l'opposé du Soleil. Il y a éclipse de Soleil lorsque l'aiguille de Lune 13 et l'aiguille de Dragon 14 se trouvent superposées à la droite reliant le Soleil et la Terre, dans l'espace compris entre ces deux derniers. Cette aiguille effectue un tour en un peu plus de 346 jours, ainsi qu'on le verra ci-après.

Pour mieux comprendre de quelle façon les disques, anneaux et aiguilles des figures 1 et 2 sont agencés et entraînés, il faut se référer à la figure 3 qui représente une vue en coupe du dispositif de la figure 1, selon la ligne III-III. Sur cette coupe, on peut voir le disque 1, les anneaux 2 à 9 et 11, le disque 12, les aiguilles 13 et 14 ainsi que le verre 17. Cette figure montre également une platine 18, servant de support aux différentes pièces mobiles, une boîte 19 entourant le dispositif et portant le verre 17. Par contre, un certain nombre de composants du dispositif selon l'invention ont été omis de cette figure, afin de ne pas la surcharger. Ainsi, seule figure une partie des mobiles que comportent les trains d'engrenages.

Avant de décrire la structure du dispositif, il faut tout d'abord relever que les surfaces supérieures du disque 1 et des anneaux 2 à 9 et 11, c'est-à-dire les surfaces visibles, qui portent les signes distinctifs des planètes et qui se trouvent du côté du verre 17, sont disposées sensiblement dans un même plan. De plus, les différents éléments d'affichage associés aux planètes sont montés pivotant sur la platine par l'intermédiaire de roulements à billes.

Le dispositif de la figure 3 comporte quatre parties distinctes :
– les moyens d'affichage et d'entraînement associés à la Terre ;
– les moyens d'affichage et d'entraînement associés à Mercure et Vénus ;
– les moyens d'affichage et d'entraînement associés à Mars, Jupiter et Saturne ; et
– les moyens d'affichage et d'entraînement associés à Uranus, Neptune, Pluton ainsi qu'à l'écliptique.

Ainsi que cela a été dit ci-dessus, les moyens d'affichage associés à la Terre comportent le disque 12 effectuant un tour en 24 heures et représentant schématiquement la Terre, la première aiguille 13 effectuant un tour en un peu plus de 29 jours et portant le symbole de la Lune et la seconde aiguille 14 dite aiguille du Dragon. Ce disque et ces aiguilles sont fixés par chassage sur trois arbres concentriques, soit un arbre de Lune 20 portant l'aiguille 13, un arbre de Dragon 21 portant l'aiguille 14 et un arbre 24 heures 22 portant le disque 12. L'arbre 21 du Dragon, formant canon, est monté sur l'arbre 20 de Lune, et l'arbre 22 du disque de 24 heures, formant lui aussi canon, est monté sur l'arbre de Dragon 21.

L'arbre de Lune 20 comporte, à son extrémité opposée à celle portant l'aiguille 13, un pivot 23 engagé dans un trou 24 formant palier dans la platine 18. Les trois arbres pivotent dans un trou 25 que comporte l'anneau 3, associé à la Terre.

Les arbres 21 et 22 de Dragon et de 24 heures portent respectivement les roues 26 et 27. L'arbre 20 de Lune porte trois roues 28, 29 et 30, la roue 28 étant solidaire de l'arbre tandis que les roues 29 et 30, solidaires l'une de l'autre, sont montées folles. Chacune de ces roues est reliée à un train d'engrenages, non représenté sur cette figure, et qui sera décrit plus précisément ci-après.

Ainsi que cela a été dit ci-dessus, l'anneau 3 de la Terre est fixe. Il comporte plus précisément un pont 31, également annulaire, fixé à la platine 18 par des moyens non représentés. Les deux faces latérales de ce pont comportent chacune une gorge 32 et 33, situées dans la moitié supérieure de l'anneau, gorges dont l'utilité sera précisée ci-après. Ce pont est recouvert d'une feuille annulaire 34 formant cadran, fixée au pont au moyen de pieds chassés à serrage dans des bouchons solidaires du pont. Un tel assemblage sera décrit ultérieurement à propos du disque 1.

Les moyens d'affichage associés à Mercure et Vénus comprennent le disque 1 et l'anneau 2.

L'anneau 2 comprend un corps 35, annulaire, de section en T inversé. Le corps 35 porte sur sa face inférieure deux bagues 36 et 37, fixées rigidement au corps 35 soit par soudage soit par vissage. La périphérie de chacune des bagues 36 et 37 porte une denture reliée aux trains d'engrenages, ainsi que cela sera expliqué ci-après.

L'anneau 2 comprend en outre une plaque annulaire 38, de diamètres intérieur et extérieur respectivement égaux aux diamètres intérieur et extérieur de la partie inférieure du corps 35. Cette plaque est fixée au corps 35 au moyen de vis dont l'une 39 est représentée sur la figure 3.

Le corps 35 et la plaque 38 définissent ainsi deux gorges latérales, l'une intérieure 40, l'autre extérieure 41. Il faut relever de plus que le corps 35 comporte des biseaux 42 et 43 reliant ses faces latérales à sa face supérieure. L'utilité de ces biseaux sera précisée ultérieurement.

Ainsi qu'on peut le voir sur la figure 3, la gorge extérieure 41 de l'anneau 2 se trouve en regard de la gorge intérieure 32 de l'anneau 3.

Ces deux gorges 32 et 41 définissent un chemin annulaire de section carrée, à l'intérieur duquel des billes 45 sont logées. Ces billes assurent le positionnement et le mouvement de l'anneau 2 sur l'anneau 3. Il faut noter ici que pour simplifier la numérotation des composants, les billes de tous les roulements portent la référence 45.

L'anneau 2 comporte en outre une feuille annulaire 55 portant le symbole de Vénus et fixé au corps 35 par des pieds chassés dans des tenons, non représentés au dessin.

Avant d'expliquer comment l'assemblage des anneaux 2 et 3 peut être réalisé, il faut encore décrire les différentes parties que comporte le disque 1. Celui-ci comprend un corps 46 muni d'une gorge latérale 47 placée au même niveau que la gorge latérale 40 de l'anneau 2 et définissant avec cette dernière un chemin annulaire de section carrée contenant également des billes 45. Ce disque 1 comprend en outre deux planches 48 et 49 superposées et fixées sur la face inférieure du corps 46, par exemple au moyen de vis non représentées au dessin.

Le corps 46 est recouvert sur sa face supérieure d'une feuille circulaire 50 portant en son centre l'image 15 représentant le Soleil et à sa périphérie le symbole de Mercure. Cette feuille comporte sur sa face inférieure des pieds dont l'un, 51 est fixé dans un trou 52 du corps 46, au moyen d'un tenon de serrage 53, avantageusement en plastique. Ce mode de fixation est également utilisé pour l'assemblage des feuilles qui recouvrent chacun des anneaux.

Pour réaliser l'assemblage des différentes parties décrites jusqu'ici, on commence par mettre en place sur la platine les trains d'engrenages qui seront décrits ci-après, ainsi que l'arbre de Lune 20, l'arbre de Dragon 21 et l'arbre de 24 heures 22. Après quoi le pont 31, qui positionne et maintient ces trois arbres, est fixé sur la platine. Le corps 46 du disque 1, muni de ses deux planches 48 et 49, est ensuite approximativement mis en place. La planche inférieure 49 prend appui sur un bossage 54 de la platine. Le corps 35 de l'anneau 2, muni de ses deux bagues 36 et 37, est alors intercalé entre le pont 31 et le corps 46. La face inférieure de la bague 37 prend appui sur la face supérieure de la planche supérieure 48.

Dans cette position, les gorges 40 et 41 sont respectivement placées au-dessous des gorges 47 et 32. A cause des biseaux 42 et 43 que comportent respectivement les gorges 40 et 41, les espaces entre le corps 35 de l'anneau 2 et le pont 31, d'une part, et du corps 46, d'autre part, sont suffisants pour y glisser les billes 45. Celles-ci se logent dans les chemins de roulement définis respectivement par les gorges 32 et 41, et 40 et 47, au niveau des gorges 32 et 47. Lorsqu'ensuite on fixe la plaque supérieure 38 sur le corps 31 au moyen des vis 39, la plaque 38 s'appuie sur les billes et le serrage des vis 39 soulève le corps 35 jusqu'à ce que, la plaque supérieure 38 étant plaquée contre le corps 35, les gorges 32 et 41 se trouvent au même niveau. De plus, comme la gorge 47 du corps 46 se trouvait initialement à un niveau inférieur à la gorge 32, il en résulte que la fixation de la plaque 38 soulève également le disque 1. De la sorte, le disque 1 et l'anneau 2 sont montés pivotant sur l'anneau 3 qui, lui, est fixé rigidement sur la platine.

Il ne reste plus alors qu'à mettre en place les feuilles 34, 50 et 55 puis à chasser le disque 12 et les aiguilles 13 et 14.

Mars, Jupiter et Saturne sont les trois planètes les plus importantes de la partie du système solaire se trouvant au-delà de la Terre. Leur trajectoire est représentée par des symboles que portent respectivement les anneaux 4, 5 et 6. Ces anneaux sont montés pivotant entre le pont 31 et un pont 60 que porte la platine 18. Ce pont 60 comporte une assise 61 en appui contre la platine 18 ainsi qu'une partie annulaire 63 s'étendant dans l'épaisseur des anneaux voisins 6 et 7. Il est fixé à la platine 18 par des vis, dont l'une 62 est représentée au dessin. Les faces intérieure et extérieure de la partie 63 comportent respectivement des gorges 64 et 65 destinées à définir des chemins annulaires pour des billes 45.

Les anneaux 4 et 6 ont une structure similaire à celle de l'anneau 2. Ils comportent chacun un corps 66, 67 en forme de T inversé, et une plaque supérieure 68 et 69. Les faces inférieures des corps 66 et 67 portent chacune une bague 70 et 71, munie d'une denture extérieure, destinée à engrener avec les trains d'engrenages qui seront décrits ci-après. Les arêtes supérieures des corps 66 et 67 sont tronquées par des biseaux non référencés qui permettent, comme cela a été expliqué ci-dessus, la mise en place des billes.

Les plaques supérieures 68 et 69 et les corps 66 et 67 auxquels elles sont respectivement vissées définissent des gorges de roulement pour des billes 45. Les plaques supérieures 68 et 69 sont respectivement recouvertes d'une feuille annulaire 74 et 75 portant l'une 74 le symbole de Mars et l'autre 75 celui de Saturne.

L'anneau 5 comporte un corps annulaire 76 dont les faces latérales sont chacune munies d'une gorge de roulement, non référencées, pour des billes 45. Ces gorges sont alignées avec celles des anneaux voisins. La face inférieure du corps 76 porte une bague 77 munie d'une denture extérieure. Le corps 76 est recouvert d'une feuille annulaire 78 portant le symbole de Jupiter.

Pour réaliser l'assemblage pivotant des anneaux 4, 5 et 6, on commence par mettre en place les corps 66, 76 et 67.

Plus précisément, le corps 67 prend appui sur l'assise 61. Les corps 66 et 76 reposent sur des bossages de la platine, non représentés au dessin. Ces bossages et l'assise 61 sont dimensionnés de manière que les faces inférieures des gorges que comportent les corps 66 et 67 se trouvent à un niveau inférieur aux faces inférieures des gorges du corps 76 et des ponts 31 et 60. De la sorte, les billes 45 peuvent être mises en place de la même manière que cela a été expliqué ci-dessus. Après quoi, les plaques 68 et 69 sont appliquées respectivement contre les corps 66 et 67 au moyen de vis non représentées au dessin. Les trois anneaux sont ainsi montés pivotant. Il suffit alors de fixer de façon similaire à la plaque 50 les feuilles annulaires 74, 75 et 78, pour terminer l'assemblage de cette partie du dispositif.

Les moyens d'affichage associés à Uranus, Neptune et Pluton forment, avec les moyens d'affichage de l'écliptique, la partie périphérique de la zone d'affichage. Ainsi que cela a été dit ci-dessus, ces moyens d'affichage sont respectivement portés par les anneaux 7, 8, 9 et 11. Contrairement aux assemblages décrits jusqu'ici, les anneaux 7, 8 et 9 ne sont pas reliés entre eux par l'intermédiaire de roulements à billes. Ceci est rendu possible du fait que la période de rotation de ces planètes est extrêmement grande. Il faut ainsi attendre plus de quatre-vingts ans pour que l'anneau 7 fasse un tour de plus que l'anneau 8. Dans ces conditions les forces de frottement des anneaux les uns sur les autres ne produisent que des pertes d'énergie très faibles.

Plus précisément, l'anneau 7 comporte un corps 80 de section en forme de F tourné tête en bas dont les barres horizontales 81 et 82 regardent vers le centre du dispositif, une plaque 83 et une feuille annulaire 84.

La barre horizontale médiane 82 définit avec la plaque 83 une gorge 85 formant avec la gorge 65 du pont 60 un chemin de roulement pour des billes 45. L'arête du corps 80 voisine de la gorge 85 est tronquée par un biseau non référencé pour permettre la mise en place des billes, de la manière expliquée ci-dessus. La barre inférieure 81 porte une denture intérieure destinée à permettre l'entraînement du disque, ainsi que cela sera décrit ci-après.

L'anneau 8 comprend un corps 86 de section en forme de L dont la barre horizontale 87 est tournée vers le centre du dispositif, et porte une denture intérieure destinée à assurer l'entraînement de l'anneau 8. Le corps 86 est recouvert d'une feuille annulaire 88 portant le symbole de Neptune.

L'anneau 9 comporte un corps 90 de section en forme de L, une plaque supérieure 91 et un feuille annulaire 92. Le corps 90 comprend plus précisément un prolongement horizontal 93 formant la barre horizontale du L et portant une denture intérieure. La partie extérieure supérieure du corps 90 comporte un dégagement qui définit avec la plaque 91 une gorge de roulement, non référencée. L'arête extérieure supérieure est tronquée par un biseau destiné, comme cela a été expliqué précédemment, à la mise en place des billes.

L'anneau 11 comporte un corps 94, une plaque 95, une feuille 96, ainsi qu'une bague 97. Le corps 94 présente, dans la partie supérieure de ses faces latérales, des dégagements qui définissent avec la plaque 95 des gorges de roulement non référencées. La bague 97 porte une denture intérieure destinée à engrener avec un mobile d'un train d'engrenages pour assurer l'entraînement de l'anneau.

L'assemblage des différentes parties est réalisé de manière similaire à ce qui a été décrit pour les autres anneaux.

Pour assurer le positionnement des anneaux 7, 8, 9 et 11, la platine porte un pont annulaire 98 fixé par des moyens non représentés. Ce pont est muni d'une gorge 99 placée à même hauteur que la gorge extérieure de l'anneau 11, pour définir avec elle un chemin de roulement pour des billes 45.

Pour assembler les anneaux 7, 8, 9 et 11, on commence par mettre en place le corps 94 muni de la bague 97. La face inférieure de la bague 97 prend appui sur le pont 98. On insère les billes 45 de manière qu'elles prennent place dans la gorge 99, puis on fixe la plaque 95 par des vis non représentées. L'anneau 11 est ainsi monté pivotant sur le pont 98. L'opération suivante consiste à mettre en place les anneaux 7, 8 et 9 emboîtés les uns dans les autres. La face inférieure du prolongement 93 est appuyée sur un bossage 100 de la platine 18. Après avoir introduit des billes dans les chemins de roulement, les plaques 83 et 91 sont respectivement fixées aux corps 80 et 90 au moyen de vis non représentées. Après quoi, les faces supérieures des plaques 83 et 91 et du corps 86 sont respectivement recouvertes des feuilles 84, 92 et 88.

Dans la mesure où les moyens d'entraînement des disques des aiguilles et des anneaux ont été mis en place correctement, le dispositif est à même de fonctionner.

Avant de décrire plus attentivement les moyens d'entraînement, il faut noter l'aspect particulier que présentent les moyens d'affichage et plus particulièrement l'ensemble des anneaux concentriques. Si chacun des anneaux est plus épais que ne le serait un disque d'affichage comme ceux connus dans l'état de la technique, il l'est nettement moins que l'ensemble des disques empilés. De plus, les trains d'engrenages peuvent être répartis sur toute la surface de la platine et ne doivent plus être rassemblés au centre comme cela est nécessaire dans les dispositifs connus.

Etant donné la complexité et le grand nombre de mobiles que comportent les différents trains d'engrenages, il n'aurait pas été possible de tous les représenter sur une même figure. Aussi, pour faciliter la compréhension, les différents trains d'engrenages seront décrits dans l'ordre suivant :
– Train d'engrenages du disque 24 heures, des aiguilles de Lune et de Dragon, ainsi que de l'anneau de l'écliptique.
– Train d'engrenages du disque associé à Mercure et des anneaux de Vénus et de Mars.
– Train d'engrenages des anneaux de Saturne, Jupiter, Uranus, Neptune et Pluton.

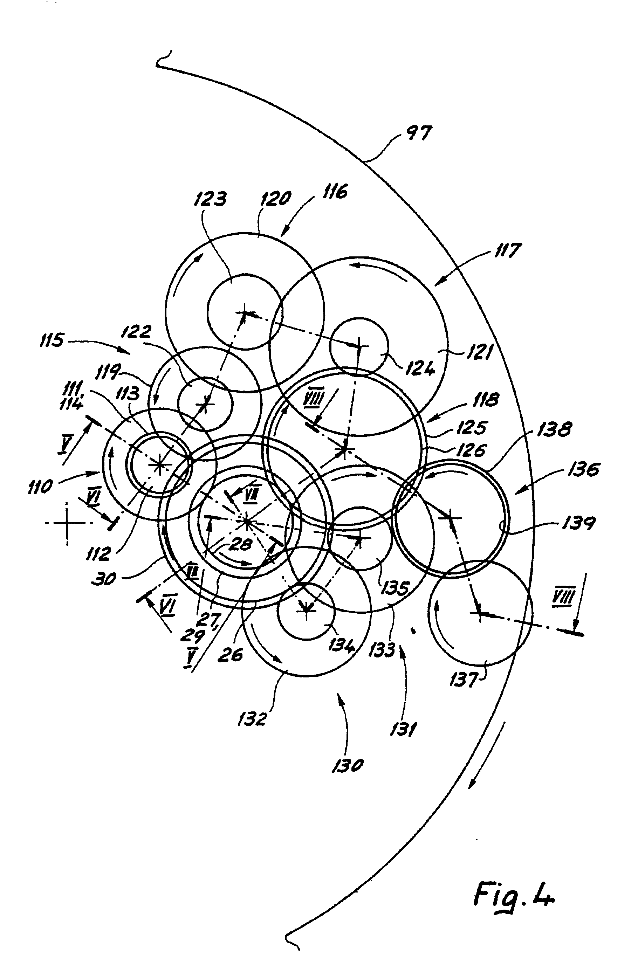

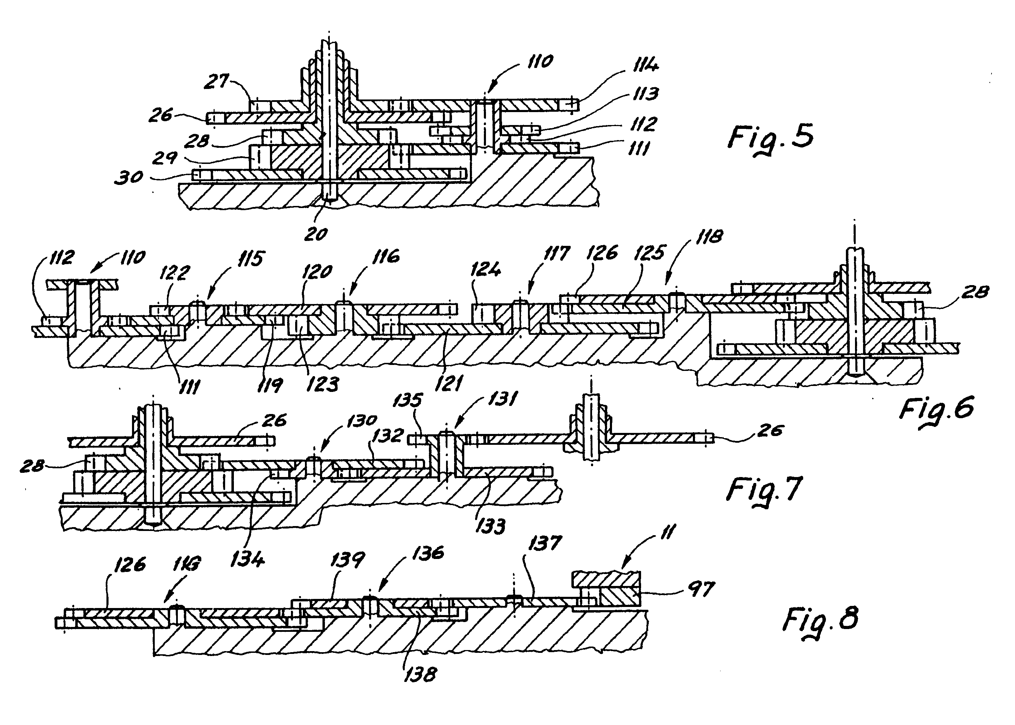

Pour mieux comprendre la structure des moyens d'entraînement du disque de 24 heures, des aiguilles de Lune et de Dragon, ainsi que de l'anneau de l'écliptique, il faut se référer à la figure 4 qui représente, vus en plan, les trains d'engrenages permettant l'affichage de ces différentes fonctions, et aux figures 5 à 8 qui représentent chacune une partie des trains d'engrenages de la figure 4 et plus précisément ceux pour entraîner respectivement le disque 24 heures, les aiguilles de Lune et de Dragon, ainsi que l'anneau de l'écliptique.

Ainsi que cela a été dit ci-dessus, les roues 29 et 30 sont solidaires l'une de l'autre et montées folles sur l'arbre 20 portant l'aiguille de Lune. La roue 30 est reliée à la roue des heures d'une montre tradionnelle par un train de renvois non représenté au dessin. Le nombre de dents que comporte la roue 30 est choisi de manière qu'elle fasse un tour en 24 heures.

Sur les figures 4 et 5, on peut également voir les roues 26, 27 et 28, coaxiales aux roues 29 et 30, ainsi qu'un mobile 110 comportant quatre roues 111, 112, 113 et 114, solidaires les unes des autres. Les roues 27 et 29, d'une part, 111 et 114, d'autre part, sont représentées par un même cercle car elles ont un même diamètre.

La roue 27, qui porte le disque 24 heures, effectue donc un tour par jour solaire. Cela revient à dire que le train d'engrenages reliant la roue 29 à la roue 27 n'a qu'une fonction de renvoi, puisque les deux roues tournent à la même vitesse.

Plus précisément, chacune des roues 27, 29, 111 et 114 comporte 37 dents. Ce train de renvois est rendu nécessaire du fait que l'on désire voir le disque 24 heures à l'arrière plutôt qu'à l'avant des aiguilles de Lune et de Dragon. La fonction des roues 112 et 113 sera expliquée ultérieurement.

Le train d'engrenages destiné à entraîner la roue 28, associée à l'arbre 20 qui porte l'aiguille de Lune 13, est représenté en coupe sur la figure 6. On peut l'identifier sur la figure 4 par la ligne brisée VI-VI qui relie les mobiles de ce train d'engrenages. Ce dernier est entraîné par le mobile 110 et plus particulièrement par sa roue 112. Il comporte, en plus du mobile 110 et de la roue 28, quatre mobiles 115 à 118. Les mobiles 115 à 117 sont munis chacun d'une roue menée respectivement référencée 119, 120 et 121 et d'une roue menante respectivement référencée 122, 123 et 124. Le mobile 118 comporte deux roues superposées 125, 126. La roue 125 tient lieu de renvoi. La roue 126 sert d'embranchement à un autre train d'engrenages, comme cela sera expliqué ci-après.

Le tableau ci-dessous a pour but de permettre le calcul de la vitesse de rotation de la roue 28 portant l'aiguille de Lune. Il comporte quatre colonnes, les deux premières se rapportant aux roues menantes, les deux autres aux roues menées. Les première et troisième colonnes indiquent les numéros de référence des roues, les deuxième et quatrième, leur nombre de dents.

| Roues menantes | | Roues menées | |
|---|---|---|---|
| Référence | Nombre de dents | Référence | Nombre de dents |
| 112 | 16 | 119 | 37 |
| 122 | 16 | 120 | 51 |
| 123 | 29 | 121 | 71 |
| 124 | 22 | 28 | 36 |

La roue 125, qui n'a qu'une fonction de renvoi, comporte 65 dents.

Pour calculer le temps nécessaire à la roue 28 pour effectuer un tour complet, sachant que le premier mobile effectue un tour par jour, il suffit de calculer le rapport du produit du nombre de dents des roues menées par le produit du nombre de dents des roues menantes. Ce rapport est égal à 29,5305. Cela représente 29 jours, 12 heures, 44 minutes, 2,8 secondes, soit, au dixième de seconde près, la valeur moyenne d'une lunaison.

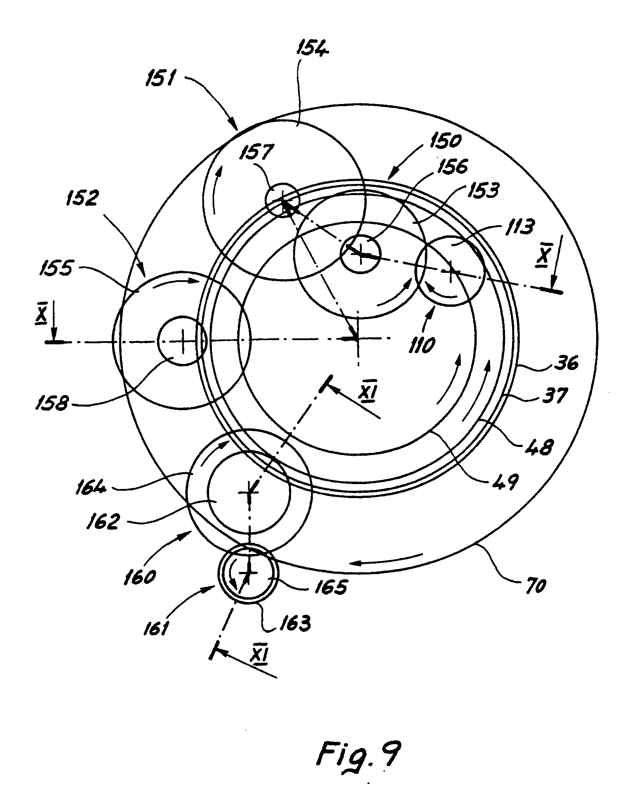

Le train d'engrenages destiné à entraîner la roue 26 solidaire du canon 21 et qui porte l'aiguille de Dragon, est représenté sur la figure 7. On peut l'identifier sur la figure 4 par la ligne brisée VII-VII qui relie les mobiles de ce train d'engrenages.

Ce dernier présente deux mobiles intermédiaires 130 et 131 comportant chacun une roue menée respectivement référencées 132 et 133 et une roue menante respectivement référencées 134 et 135.

Le tableau ci-dessous a la même structure que le tableau précédent et présente les caractéristiques du rouage de l'aiguille de Dragon.

| Roues menantes | | Roues menées | |
|---|---|---|---|
| Référence | Nombre de dents | Référence | Nombre de dents |
| 88 | 36 | 132 | 57 |
| 134 | 22 | 133 | 52 |
| 135 | 22 | 26 | 69 |

Pour calculer la période de rotation, on procède de la même façon que ci-dessus, sachant que la roue 28 effectue un tour en 29 jours, 12 heures, 44 minutes et 2,8 secondes. Il en résulte que l'aiguille de Dragon effectue un tour en 346,6183364 jours, soit 346 jours, 14 heures, 50 minutes et 24 secondes. Le sens de rotation de cette aiguille est inverse de celui de l'aiguille de Lune puisque ce train d'engrenages comporte deux roues intermédiaires.

Théoriquement, les aiguilles de Lune et de Dragon devraient être en conjonction tous les 27 jours, 5 heures, 5 minutes et 35,8 secondes, cette période de temps étant appelée mois du Dragon.

Dans le présent dispositif, la période entre conjonctions est égale à 27 jours, 5 heures, 5 minutes et 34,9 secondes. La précision sur un mois est donc supérieure à la seconde.

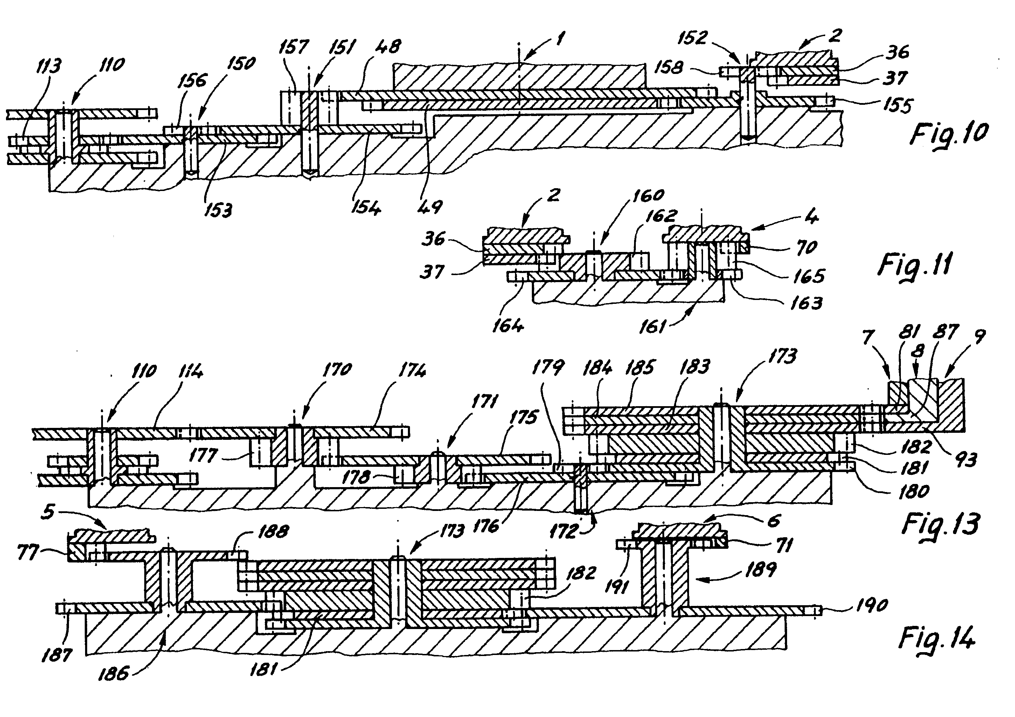

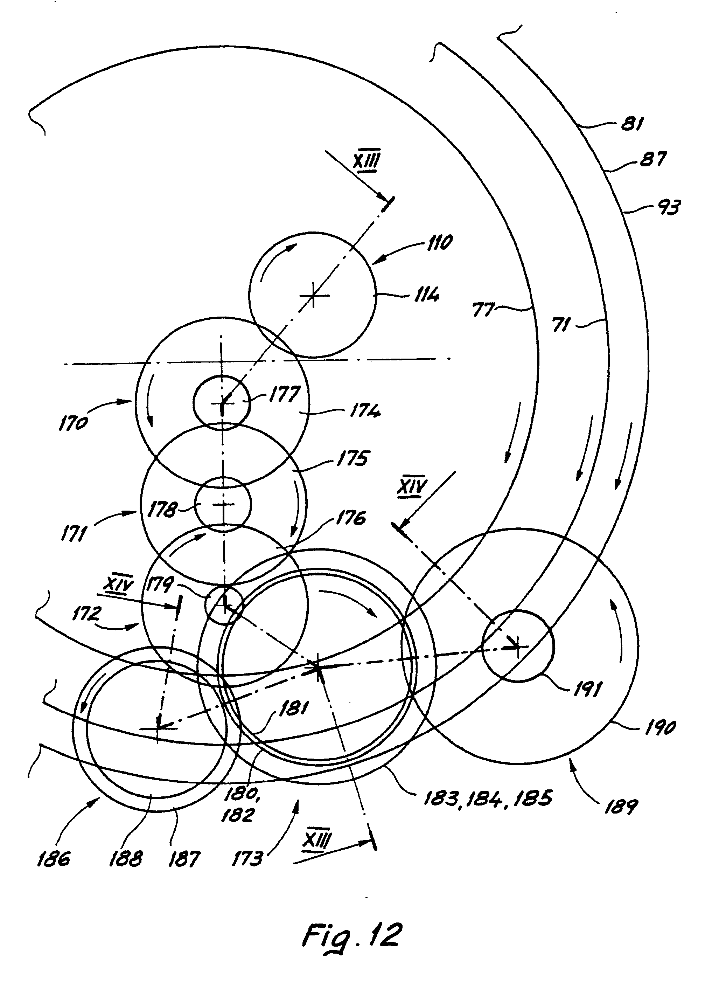

Le train d'engrenages destiné à entraîner l'anneau de l'écliptique 11 est représenté en coupe à la figure 8. Il peut être identifié sur la figure 4 par la ligne brisée VIII-VIII qui relie les centres des mobiles de ce train d'engrenages. Ce dernier est rattaché au train d'engrenages entraînant la roue portant l'aiguille de Lune par le mobile 118 et plus précisément par la roue 126. Il entraîne la bague dentée 97 que porte l'anneau de l'écliptique 11. Il comporte deux mobiles 136 et 137. Le mobile 136 est muni de deux roues superposées, l'une menée 138, l'autre menante 139. Le mobile 137 ne comprend qu'une roue faisant office de renvoi.

Le tableau ci-dessous a la même structure que les tableaux précédents et présente les caractéristiques du rouage d'entraînement de l'anneau de l'écliptique.

| Roues menantes | | Roues menées | |
|---|---|---|---|
| Référence | Nombre de dents | Référence | Nombre de dents |
| 126 | 61 | 138 | 45 |
| 139 | 35 | 97 | 325 |

Le mobile 137, qui a une fonction de renvoi, comporte 35 dents.

La période de l'anneau d'écliptique est calculée de la même façon que ci-dessus, à partir des rapports d'engrenages, en tenant compte bien entendu de la partie commune avec le train d'engrenages entraînant la roue 28.

Cette période est de 365 jours, 5 heures, 48 minutes, 46,6 secondes. Or, la durée théorique de l'année tropique, c'est-à-dire la période que met la Terre pour effectuer une révolution complète autour du Soleil, est de 365 jours, 5 heures, 48 minutes et 46 secondes. La précision sur une année est supérieure à la seconde.

Avant d'analyser les trains d'engrenages permettant l'entraînement du disque de Mercure et des anneaux associés aux autres planètes, il faut relever que la période de rotation de ces disque et anneaux doit être choisie égale à la période de révolution synodique de ces planètes (période mesurée dans le référentiel Terre-Soleil) et non à la période de révolution sidérale (période mesurée dans le référentiel Soleil-Etoiles).

Cela se comprend très bien dès lors que, dans le dispositif selon l'invention, l'anneau associé à la Terre est fixe. Or, la Terre est animée d'un mouvement de rotation dont la période, appelée année tropique, est de 365,24219 jours, soit 365 jours, 5 heures, 48 minutes et 46 secondes. Pour représenter correctement le mouvement de rotation des planètes dans le référentiel Soleil-Terre, il faut retrancher de la vitesse angulaire des planètes autour du Soleil la vitesse angulaire de la Terre autour du Soleil. Cela a pour conséquence que, dans le planétarium selon l'invention, les planètes proches du Soleil (Mercure et Vénus), dont la période de révolution est inférieure à celle de la Terre, tournent dans le sens normal, c'est-à-dire anti-horaire, mais à une vitesse angulaire inférieure à leur vitesse de rotation autour du Soleil.

Par ailleurs, les planètes plus éloignées du Soleil que ne l'est la Terre, par exemple Mars, ont une période de révolution plus grande que celle de la Terre (ou une vitesse plus faible). Dans le planétarium selon l'invention, les anneaux associés à ces planètes doivent donc tourner dans le sens horaire. On peut en outre relever que les anneaux associés aux planètes les plus éloignées (Neptune, Uranus et Pluton) tournent pratiquement à raison de un tour par année, dans le sens horaire, car leur vitesse de rotation autour du Soleil est très faible.

Les périodes de révolution synodique citées ci-après sont tirées de : "Landolt-Börnstein ; Numerical data and functional relationships in science and technology group VI, volume I, Springer Verlag, Berlin 1965".

Les trains d'engrenages permettant l'entraînement du disque de Mercure et de l'anneau de Vénus sont représentés en plan sur la figure 9 et en coupe sur la figure 10.

Ce train d'engrenages est entraîné par la roue 113 appartenant au mobile 110 et qui fait un tour en 24 heures. Il comporte les bagues dentées 36 et 37 solidaires de l'anneau de Vénus 2 et les roues 48 et 49 solidaires du disque de Mercure 1, ainsi que trois mobiles intermédiaires portant les références 150 à 152.

Ces mobiles sont munis chacun d'une roue menée, référencées 153 à 155, et d'une roue menante référencées 156 à 158.

Plus précisément, les mobiles 150 et 151 sont intercalés entre le mobile 110 et la planche 48, tandis que le mobile 152 est intercalé entre la planche 49 et la bague dentée 36.

Le tableau ci-après a la même structure que les tableaux précédents et présente les caractéristiques des trains d'engrenages entraînant le disque de Mercure et l'anneau de Vénus.

| Roues menantes | | Roues menées | |
|---|---|---|---|
| Référence | Nombre de dents | Référence | Nombre de dents |
| 113 | 20 | 152 | 38 |
| 155 | 10 | 153 | 57 |
| 156 | 10 | 48 | 107 |
| 49 | 70 | 154 | 40 |
| 157 | 11 | 36 | 97 |

La période du disque de Mercure est calculée à partir du rapport du produit du nombre de dents des roues menées 152, 153 et 48 au produit du nombre de dents des roues menantes 113, 155 et 156. Cette période est de 115,88 jours, ce qui correspond exactement à la période de révolution synodale de cette planète.

La période de l'anneau de Vénus est obtenue à partir du rapport du produit du nombre de dents de toutes les roues menées au produit du nombre de dents de toutes les roues menantes du tableau ci-dessus. Cette période est de 583,92 jours, ce qui correspond à la période de révolution synodale de Vénus.

Le train d'engrenages permettant l'entraînement de l'anneau 6 associé à Mars est représenté en coupe sur la figure 11. Il est également visible sur la figure 9, identifiable par la ligne brisée XI-XI qui relie les centres des mobiles de ce train d'engrenages. Ce dernier comporte deux mobiles 160 et 161 reliant la bague dentée 37 solidaire de l'anneau de Vénus à la bague dentée 70 solidaire de l'anneau de Mars. Chacun de ces deux mobiles comporte une roue menée 162 et 163 et une roue menante 164 et 165.

Le tableau ci-dessous a la même structure que les tableaux précédents et présente les caractéristiques d'engrenages entraînant l'anneau de Mars.

| Roues menantes | | Roues menées | |
|---|---|---|---|
| Référence | Nombre de dents | Référence | Nombre de dents |
| 37 | 94 | 162 | 24 |
| 164 | 36 | 163 | 15 |
| 165 | 9 | 70 | 113 |

La période de l'anneau de Mars est calculée à partir du rapport du produit du nombre de dents des roues menées 162, 163 et 70 au produit du nombre de dents des roues menantes 37, 164 et 165, sachant que la roue 27 effectue un tour en 583,92 jours. Cette période est de 779,94 jours, ce qui correspond exactement à la période de révolution synodale de Mars

Il faut relever que le train d'engrenages intercalé entre les bagues dentées 37 et 70 comporte un nombre pair de mobiles, ce qui signifie que ces deux bagues ont un sens de rotation différent.

Pour analyser de plus près la structure des trains d'engrenages associés aux planètes lointaines, il faut se référer à la figure 12, dans laquelle ils sont représentés en plan, ainsi qu'aux figures 13 et 14 qui représentent respectivement les trains d'engrenages de Neptune, Uranus et Pluton, et de Jupiter et Saturne.

Pour des raisons de commodité de description, nous décrirons tout d'abord le train d'engrenages entraînant les trois planètes les plus lointaines puis celui entraînant Jupiter et Saturne.

Le train d'engrenages entraînant les anneaux de Neptune, Uranus et Pluton est représenté en coupe sur la figure 13. Il peut être identifié sur la figure 12 par la ligne brisée XIII-XIII qui relie les centres des mobiles que ce train comporte. Ce dernier est entraîné par la roue 114, appartenant au mobile 110 et qui fait un tour par jour. Il comporte quatre mobiles 170, 171, 172 et 173. Les trois premiers mobiles sont munis chacun d'une roue menée 174, 175 et 176 et d'une roue menante 177, 178 et 179. Le mobile 173 comporte une roue menée 180 et cinq roues menantes 181 à 185 superposées et solidaires les unes des autres. Les roues 181 et 182 sont respectivement destinées à entraîner les trains d'engrenages de Jupiter et de Saturne. La roue 183 engrène avec la bague dentée 93 de l'anneau de Pluton 9. La roue 184 engrène avec la bague dentée 87 de l'anneau de Neptune 8 et la roue 185 engrène avec la bague dentée 81 de l'anneau d'Uranus 7.

Le tableau ci-après a la même structure que les tableaux précédents et présente les caractéristiques des trains d'engrenages entraînant les anneaux d'Uranus, Neptune et Pluton. La première partie de ce tableau est commune à l'entraînement de ces trois anneaux, ainsi d'ailleurs que ceux de Jupiter et Saturne, comme cela sera expliqué ci-après. Les trois dernières parties se rapportent respectivement à Uranus, Neptune et Pluton.

| Roues menantes | | Roues menées | |
|---|---|---|---|
| Référence | Nombre de dents | Référence | Nombre de dents |
| 114 | 37 | 174 | 52 |
| 177 | 18 | 175 | 60 |
| 178 | 18 | 176 | 60 |
| 179 | 12 | 180 | 73 |
| Uranus | | | |
| 185 | 46 | 81 | 179 |
| Neptune | | | |
| 184 | 38 | 87 | 147 |
| Pluton | | | |
| 183 | 43 | 93 | 166 |

Sachant que la roue 114 effectue un tour en un jour, la période de rotation des anneaux de Uranus, Neptune et Pluton peut être calculée par le rapport du nombre de dents des roues, ainsi que cela a été fait pour les autres tableaux.

La période de rotation des trois anneaux est la suivante :

| | Période de rotation |
|---|---|
| Uranus | 369,65 jours |
| Neptune | 367,48 jours |
| Pluton | 366,72 jours |

Comparativement, la période de révolution synodale de ces planètes est la suivante :

| | Période de révolution synodale |
|---|---|
| Uranus | 369,66 jours |
| Neptune | 367,48 jours |
| Pluton | 366,72 jours |

Ainsi qu'on peut le voir les périodes de rotation des anneaux et les périodes de révolution synodale des planètes sont respectivement égales à l'exception d'Uranus où le dernier chiffre significatif présente un écart égal à 1.

Pour terminer, il faut examiner les trains d'engrenages entraînant les anneaux de Jupiter et de Saturne, et plus précisément les parties qui ne sont pas communes avec les trois planètes les plus éloignées. Ces

EP 0 258 720 B1

trains d'engrenages, vus en coupe sur la figure 14, sont identifiables sur la figure 12 par la ligne brisée XIV-XIV qui relie les centres des mobiles que ces trains d'engrenages comportent.

La roue 182, appartenant au mobile 173, est reliée à la bague 77 de l'anneau de Jupiter par un mobile 186 comportant une roue menée 187 et une roue menante 188.

La roue 181, appartenant également au mobile 173, est reliée à la bague 71 de l'anneau de Saturne par un mobile 189 comprenant une roue menée 190 et une roue menante 191.

Le tableau ci-après, dont la structure est similaire à celle des tableaux précédents, se limite à la partie du train d'engrenages propre à l'entraînement des anneaux de Jupiter et de Saturne, la première partie se rapportant à Jupiter et la seconde à Saturne.

| Roues menantes | | Roues menées | |
|---|---|---|---|
| Référence | Nombre de dents | Référence | Nombre de dents |
| **Jupiter** | | | |
| 182 | 61 | 187 | 49 |
| 188 | 22 | 77 | 115 |
| **Saturne** | | | |
| 181 | 68 | 190 | 43 |
| 191 | 34 | 71 | 214 |

Pour calculer la période de rotation des anneaux de Jupiter et de Saturne, il faut calculer le rapport du produit du nombre de dents, ainsi que cela a été fait jusqu'ici, en tenant compte du train d'engrenages commun et de la partie propre à chacune de ces planètes.

On obtient ainsi pour l'anneau de Jupiter une période de rotation égale à 398,88 jours, ce qui correspond à la période de révolution synodale de Jupiter.

On obtient par ailleurs pour l'anneau de Saturne une période de rotation égale à 378,09 jours, valeur égale à une période de révolution synodale de Saturne.

Ainsi, pour chacun des moyens d'affichages, la précision obtenue est du même ordre de grandeur que la variation naturelle de la période de révolution synodale de la planète auquel ce moyen d'affichage est associé.

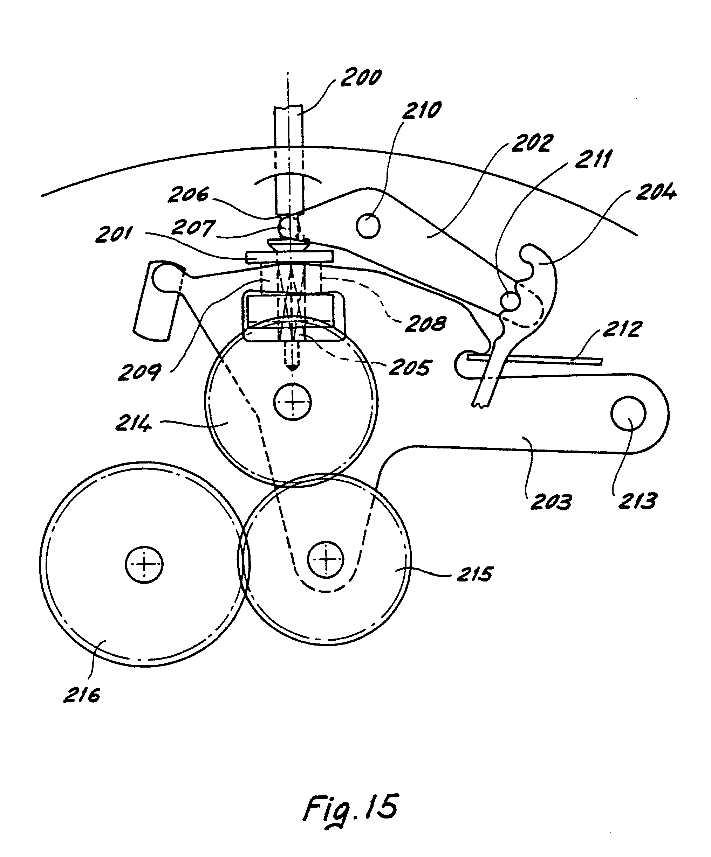

La figure 15 représente un mécanisme permettant de corriger le planétarium lorsque pour une raison ou une autre, les moyens d'entraînement ont failli à leur tâche.

Ce mécanisme comporte une tige de mise à l'heure 200, un pignon coulant 201, une tirette 202, une bascule 203 et un ressort sautoir 204. La tige 200 est munie d'un carré 205 sur lequel le pignon coulant peut glisser axialement, et d'une gorge 206 dans laquelle est engagé un premier tenon 207, solidaire de la tirette 202. Le pignon coulant comporte une gorge 208 à l'intérieur de laquelle est engagé un bras 209 que comporte la bascule 203. La tirette 202 pivote autour d'un axe 210, perpendiculaire au plan de la platine. Elle comporte en outre un second tenon 211, qui coopère avec l'extrémité du ressort sautoir 204. Le mécanisme comporte en outre un ressort 212, prenant appui sur un bec de la bascule 203. Cette dernière pivote autour de l'axe 213 et est maintenue en appui contre la tirette 202, par la pression du ressort 212. Cette bascule porte en outre deux renvois 214 et 215 qui engrènent respectivement avec le pignon coulant 201 et avec un mobile 216 cinématiquement relié à la roue 30.

Le mécanisme présente en fait toutes les caractéristiques d'un mécanisme de mise à l'heure d'une montre traditionnelle. Il est agencé de manière que la tige 200 puisse occuper trois positions. Lorsque la tige est enfoncée, la bascule 203 est dans une position telle que le renvoi 215 est libre. Si les moyens d'entraînement du planétarium sont constitués par le mouvement d'une montre mécanique, c'est dans cette position que s'effectuerait l'armage du ressort de ce mouvement.

Lorsque la tige occupe la première position tirée, qui est celle représentée à la figure 15, le renvoi 215 engrène avec la roue 216, ce qui permet d'entraîner tous les trains d'engrenages du dispositif, et par là de rattraper le temps durant lequel le dispositif n'a pas fonctionné.

Lorsque les moyens d'entraînement du planétarium sont constitués par le mouvement d'une montre ou d'une pendulette, les aiguilles de secondes, de minutes et d'heures ne peuvent pas être entraînées en même temps que les disques et anneaux. C'est pourquoi il est nécessaire de prévoir une friction entre le rouage de la montre et celui du dispositif. Cette friction n'a pas été représentée, étant d'un type connu de l'homme du métier.

Si cette montre comporte un mécanisme de calendrier, celui-ci est avantageusement couplé aux moyens de correction du planétarium. Dans ce cas, il suffit de remettre le mécanisme de quantième à la date pour que le planétarium se retrouve dans une position correcte.

Dans une seconde position tirée, la bascule 203 se déplace axialement vers le centre du dispositif, de manière que le renvoi 215 engrène avec une roue du rouage de minuterie de la montre, roue non représentée au dessin.

Le dispositif ainsi décrit permet bien de réaliser un planétarium de dimensions réduites, et plus particulièrement en ce qui concerne son épaisseur. Comme on a pu le voir, ceci est dû à l'utilisation d'anneaux concentriques, qui permet d'étaler les différents trains d'engrenages sur toute la surface de la pièce, et n'oblige pas à les rassembler au centre, comme cela s'est fait jusqu'ici.

De plus, grâce au fait que l'anneau associé à la Terre est fixe, il a été possible de munir le planétarium d'informations relatives à la Lune. Dans les dispositifs connus jusqu'ici, l'affichage de telles informations n'était possible qu'en utilisant des engrenages différentiels, ce type d'engrenages compliquant singulièrement la construction et augmentant le volume du planétarium.

Enfin, grâce à la présence d'un réseau réticulé, il est possible de lire la position des planètes relativement à la Terre, bien que le rapport entre le diamètre des anneaux et la distance moyenne entre le Soleil et les planètes auxquels ces anneaux sont associés ne soit pas constant.

Il est toutefois bien entendu que le dispositif ainsi décrit n'est qu'un exemple d'application de l'invention. Il est ainsi possible de réaliser un planétarium ne comportant pas les fonctions lunaires, auquel cas rien n'empêcherait l'utilisation d'un référentiel stellaire, l'anneau de Terre étant alors mobile. Dans un dispositif de petite dimension, le réseau réticulé pourrait être supprimé, car la correction qu'il apporte est pratiquement du même ordre de grandeur que la précision de la mesure.

Il va de soi que les nombres de dents des roues des différents trains d'engrenages ne sont donnés qu'à titre d'exemple non limitatif.

Par ailleurs, les moyens d'entraînement du planétarium peuvent être constitués par un moteur synchrone entraîné par un courant alternatif ou par le mouvement d'une montre, d'une pendulette ou d'une horloge, de type mécanique ou électromécanique.

## Revendications

1. Dispositif horométrique indicateur de la position des planètes du système solaire comportant un bâti (18), un organe moteur, des moyens d'affichage de ladite position montés pivotants sur ledit bâti (18), lesdits moyens d'affichage comprenant une pluralité d'éléments mobiles en rotation autour d'un axe commun, chacun desdits éléments mobiles comprenant un organe support (46 ; 43, 35 ; 66, 68 ; 76 ; 67, 69 ; 80, 83 ; 86 ; 91 ; 94, 95), un organe d'affichage (50 ; 55 ; 74 ; 78 ; 75 ; 84 ; 88 ; 92 ; 96) représentant un signe distinctif associé à l'une desdites planètes et un organe d'entraînement (48 ; 36 ; 70 ; 77 ; 71, 81 ; 87 ; 93 ; 97) relié cinématiquement à l'organe moteur, l'organe d'affichage et l'organe d'entraînement étant solidaires de l'organe support, caractérisé en ce qu'au moins certains des éléments mobiles sont formés par des anneaux concentriques coplanaires présentant une surface d'affichage (1-9) qui porte ledit signe et en ce que les organes d'entraînement s'étendent sensiblement dans un même plan.

2. Dispositif horométrique selon la revendication 1, caractérisé en ce que les anneaux **concentriques coplanaires** sont jointifs.

3. Dispositif **horométrique** selon la revendication 1 ou 2, caractérisé en ce que chaque anneau est suspendu à l'aide de deux roulements à **billes** (45) périphériques sensiblement coplanaires, chacun d'eux ayant une première bague ménagée dans l'anneau en question, une seconde bague étant ménagée sur l'anneau voisin ou sur le bâti (18).

4. Dispositif **horométrique** selon la revendication 3, caractérisé en ce qu'il comporte un anneau solidaire dudit bâti (18) et portant le signe distinctif associé à la Terre et en ce que les autres anneaux **concentriques coplanaires** sont animés d'une vitesse angulaire égale à la différence des vitesses angulaires moyennes autour du Soleil de la planète dont le signe distinctif est porté par ledit anneau et de la Terre.

5. Dispositif **horométrique** selon la revendication 4, caractérisé en ce que ledit dispositif comporte en outre des moyens d'affichage complémentaires (12,13,14) tournant autour d'un second axe parallèle audit premier axe, **qui est défini par ladite pluralité d'éléments mobiles en rotation autour d'un axe commun**, et traversant l'anneau portant le signe distinctif associé à la Terre, lesdits moyens d'affichage

13

EP 0 258 720 B1

complémentaires portant un signe distinctif (13) associé à la Lune.

6. Dispositif **horométrique** selon les revendications 4 ou 5, caractérisé en ce qu'il comporte en outre un anneau mobile (11) portant un réseau définissant au moins certains points singuliers que comporte l'écliptique.

7. Dispositif **horométrique** selon l'une des revendications 4 à 6, caractérisé en ce que lesdits anneaux **concentriques coplanaires** portant les signes distinctifs des planètes les plus éloignées du Soleil ont un diamètre dont le rapport à la distance Soleil-planète est inférieur au rapport entre le diamètre de l'anneau portant le signe **distinctif** de la Terre et la distance Terre-Soleil et en ce que ledit **bâti** (18) comporte en outre un réseau réticulé permettant la lecture de la position angulaire des planètes vues de la Terre, par rapport du Soleil, malgré l'erreur de parallaxe due à la différence entre lesdits rapports.

### Ansprüche

1. Zeitmessende Anzeigeeinrichtung für die Position der Planeten des Sonnensystems, umfassend ein Gestell (18), ein Motororgan, auf dem Gestell (18) drehbar angeordnete Anzeigemittel der Position, welche eine Mehrzahl von um eine gemeinsame Achse drehbeweglichen Elementen umfassen, wobei jedes der drehbeweglichen Elemente ein Abstützorgan (46 ; 43, 35 ; 66, 68 ; 76 ; 67, 69 ; 80, 83 ; 86 ; 91 ; 94, 95), ein Anzeigeorgan (50 ; 55 ; 74 ; 78 ; 75 ; 84 ; 88 ; 92 ; 96) zum Repräsentieren eines unterscheidenden, einem der Planeten zugeordneten Zeichens und ein Antriebsorgan (48 ; 36 ; 70 ; 77 ; 71, 81 ; 87 ; 93 ; 97) umfaßt, kinematisch verbunden mit dem Motororgan, wobei das Anzeigeorgan und das Antriebsorgan mit dem Abstützorgan verbunden sind, dadurch gekennzeichnet, daß zumindest bestimmte drehbewegliche Elemente von konzentrischen koplanaren Lochscheiben gebildet sind, die eine Anzeigeoberfläche (1 bis 9) aufweisen, welche das Zeichen tragen, und daß die Antriebsorgane sich im wesentlichen in einundderselben Ebene erstrecken.

2. Zeitmessende Einrichtung nach Anspruch 1, dadurch gekennzeichnet, daß die konzentrischen koplanaren Lochscheiben fugendicht sind.

3. Zeitmessende Einrichtung nach Anspruch 1 oder 2, dadurch gekennzeichnet, daß jede Lochscheibe mittels zweier peripherer, im wesentlichen koplanarer Kugellager (45) aufgehangen ist, von denen jedes einen ersten, in die fragliche Lochscheibe eingearbeiteten Laufring besitzt, während ein zweiter Laufring in die benachbarte Lochscheibe oder das Gestell eingearbeitet ist.

4. Zeitmessende Einrichtung nach Anspruch 3, dadurch gekennzeichnet, daß sie eine mit dem Gestell (18) verbundene und das unterscheidende, der Erde zugeordnete Zeichen tragende Lochscheibe umfaßt und daß die anderen konzentrischen koplanaren Lochscheiben zu einer Winkelgeschwindigkeit angetrieben sind, die gleich ist der Differenz der mittleren Winkelgeschwindigkeiten um die Sonne des Planeten, dessen unterscheidendes Zeichen von der Lochscheibe getragen wird, und der Erde.

5. Zeitmessende Einrichtung nach Anspruch 4, dadurch gekennzeichnet, daß die Einrichtung ferner komplementäre Anzeigemittel (12, 13, 14) umfaßt, umlaufend um eine zweite Achse, die zur ersten Achse parallel ist, welche erste Achse definiert ist durch die Mehrzahl der um eine gemeinsame Achse drehbeweglichen Elemente, und die die Lochscheibe durchsetzt, welche das unterscheidende, der Erde zugeordnete Zeichen trägt, welche komplementären Anzeigemittel ein unterscheidendes, dem Mond zugeordnetes Zeichen (13) tragen.

6. Zeitmessende Einrichtung nach Anspruch 4 oder 5, dadurch gekennzeichnet, daß sie ferner eine bewegliche Lochscheibe (11) umfaßt, die ein Netzwerk trägt, das mindestens bestimmte singuläre Punkte, welche die Eklipse umfaßt, definiert.

7. Zeitmessende Einrichtung nach einem der Ansprüche 4 bis 6, dadurch gekennzeichnet, daß die konzentrischen, koplanaren, die unterscheidenden den am weitesten von der Sonne entfernten Planeten zugeordneten Zeichen tragenden Lochscheiben einen Durchmesser aufweisen, dessen Verhältnis zum Abstand Sonne-Planet kleiner ist als das Verhältnis zwischen dem Durchmesser der das unterscheidende Zeichen der Erde tragenden Lochscheibe und dem Abstand Erde-Sonne, und daß das Gestell (18) ferner ein Gitternetz umfaßt, das die Ablesung der Winkelposition des Planeten, gesehen von der der Erde, relativ zur Sonne ermöglicht trotz des Parallaxenfehlers infolge der Differenz zwischen den Verhältnissen.

### Claims

1. Horometric arrangement for indicating the position of the planets in the solar system including a support (18), motor means, display means for displaying said position pivotally mounted on said support (18), said display means comprising a plurality of movable elements rotatable about a common axis, each of said movable elements having a support member (46, 43, 35, 66, 68, 76, 67, 69, 80, 83, 86, 91, 94, 95), a display member (50, 55, 74, 78, 75, 84, 88, 92, 96) representing a distinctive sign associated with one of said planets and gear means (48, 36, to 77, 81, 87, 93, 97) cinematically connected to the power member, said display member and said gear means being fixed to the support member, characterized in that at least some of the movable elements are in the form of concentric and coplanar rings having a display surface (1-9) bearing said sign and in that the gear means are arranged substantially in the same plane.

2. Horometric arrangement as set forth in claim 1, characterized in that the concentric coplanar rings are jointed.

3. Horometric arrangement as set forth in claim 1 or 2, characterized in that each ring is suspended with two peripheric substantially coplanar ball bearings (45) each of them having a first race fixed to the ring in question, a second race fixed to the adjacent ring or to the support (18).

4. Horometric arrangement as set forth in claim 3, characterized in that it includes a ring fixed to said support (18) and bearing the distinctive sign associated with the Earth and in that the remaining concentric coplanar rings are driven with an angular velocity equal to the difference between the average angular velocities around the Sun, of the planet the sign of which is borne by said ring, and the Earth.

5. Horometric arrangement as set forth in claim 4, characterized in that said arrangement further comprises complementary display means (12, 13, 14) turning about a second axis parallel to said first axis, which is defined by said plurality of movable elements rotatable about a common axis, and traversing the ring bearing the distinctive sign associated with the Earth, said complementary display means bearing a distinctive sign (13) associated with the Moon.

6. Horometric arrangement as set forth in claims 4 or 5, characterized in that it further comprises a movable ring (11) bearing a network defining at least certain specific points included in the ecliptic.

7. Horometric arrangement as set forth in claims 4 to 6, characterized in that said concentric coplanar rings bearing the distinctive signs of the planets furthest from the Sun have a diameter the ratio to the distance sun-planet of which is less than the ratio between the diameter of the ring bearing the distinctive sign of the Earth and the distance Earth-Sun and in that said support (18) further includes a reticulated network enabling reading of the angular position of the planets seen from the Earth relative to the difference between said ratios.

Fig. 1

Fig.2

*Fig.3*

EP 0 258 720 B1

Fig. 4

Fig.5

Fig.6

Fig.7

Fig.8

Fig.9

Fig.10

Fig.11

Fig.13

Fig.14

EP 0 258 720 B1

Fig. 12

Fig.15